(19) Europäisches Patentamt
European Patent Office
Office européen des brevets

(11) EP 4 742 309 A1

(12) **EUROPEAN PATENT APPLICATION**

(43) Date of publication:
**13.05.2026 Bulletin 2026/20**

(21) Application number: **25209383.6**

(22) Date of filing: **17.10.2025**

(51) International Patent Classification (IPC):
***H01M 4/04*** *(2006.01)* ***H01M 4/133*** *(2010.01)*
***H01M 4/1393*** *(2010.01)* ***H01M 4/36*** *(2006.01)*

(52) Cooperative Patent Classification (CPC):
**H01M 4/1393; H01M 4/0404; H01M 4/043; H01M 4/133; H01M 4/366;** Y02E 60/10

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **07.11.2024 CN 202411585429**

(71) Applicant: **AESC Japan Ltd.**
**Yokohama-shi, Kanagawa 220-0012 (JP)**

(72) Inventor: **HOU, Shuyan**
**Pudong New Area Shanghai, 201315 (CN)**

(74) Representative: **Becker, Eberhard**
**Becker Kurig & Partner**
**Patentanwälte mbB**
**Bavariastraße 7**
**80336 München (DE)**

# (54) NEGATIVE ELECTRODE SHEET, ELECTROCHEMICAL DEVICE, AND ELECTRONIC EQUIPMENT

(57) The present disclosure discloses a negative electrode sheet, an electrochemical device, and an electronic equipment. A specific surface area decrease rate $P_0$ of the negative electrode sheet is 12% to 18%; wherein $P_0$=1-P, P is a ratio of a specific surface area of the negative electrode sheet under a second compaction to the specific surface area of the negative electrode sheet under a first compaction; an electrode sheet porosity ε of the negative electrode sheet is 13% or more, wherein the electrode sheet porosity is the electrode sheet porosity of the negative electrode sheet under the second compaction. The electrochemical device (especially a lithium-ion battery) containing the above can ensure excellent discharge capacity, fast charging performance, and cycle performance, and take into account excellent energy density, cycle performance, and storage performance.

EP 4 742 309 A1

## Description

BACKGROUND

Technical Field

The present disclosure relates to a negative electrode sheet, an electrochemical device, and an electronic equipment.

Description of Related Art

Conventional natural graphite, such as flake graphite, has the characteristics of high capacity and high compaction, but is usually difficult to apply in practice due to its own defects. The capacity of artificial graphite is difficult to exceed 360 mAh/g, and it is difficult for the compaction to exceed 1.70 g/cc-1 when artificial graphite is made into an electrode sheet. Even if forced to achieve the above, the dynamics are extremely poor. Compared with conventional natural graphite and artificial graphite, microcrystalline natural graphite has the intrinsic characteristics of high capacity and good dynamics, and has excellent application prospects in high-capacity fast-charging lithium-ion batteries.

Chinese patent application CN 110380050A adopts a method of asphalt impregnation filling to improve the intrinsic powder pressure of microcrystalline graphite, but this treatment reduces the pores of the material itself, significantly deteriorate the dynamics of the material itself, and has limited effect on the compaction of the electrode sheet at the electrode sheet compaction level, and the lithium-ion battery containing the above cannot guarantee excellent discharge capacity, fast charging performance, and cycle performance. Therefore, it is crucial to achieve excellent discharge capacity, fast charging performance, and cycle performance for lithium-ion batteries using graphite materials as negative electrode materials.

SUMMARY

In order to solve the defect that the existing lithium-ion batteries containing graphite materials cannot guarantee excellent discharge capacity, fast charging performance, and cycle performance, the present disclosure provides a negative electrode sheet, an electrochemical device, and an electronic equipment. The electrochemical device (especially the lithium-ion battery) containing the negative electrode sheet can guarantee excellent discharge capacity, fast charging performance, and cycle performance, and also take into account excellent energy density, cycle performance, and storage performance.

To achieve the above object, the present disclosure adopts the following technical solutions.

In a first aspect, the present disclosure provides a negative electrode sheet, wherein a specific surface area decrease rate $P_0$ of the negative electrode sheet is 12% to 18%; wherein $P_0$=1-P, P is a ratio of a specific surface area of the negative electrode sheet under a second compaction to the specific surface area of the negative electrode sheet under a first compaction;

> an electrode sheet porosity $\varepsilon$ of the negative electrode sheet is 13% or more, wherein the electrode sheet porosity is the electrode sheet porosity of the negative electrode sheet under the second compaction;
> the second compaction is 1.80 g/cc or an ultimate compaction of the negative electrode sheet; the first compaction is 1.65 g/cc.

In a second aspect, the present disclosure provides an electrochemical device including the negative electrode sheet.

In a third aspect, the present disclosure provides an electronic equipment including the electrochemical device.

The positive and progressive effects of the present disclosure are:
The present disclosure provides a negative electrode sheet. By controlling and designing parameters such as the specific surface decrease rate of the negative electrode sheet and the electrode sheet porosity of the negative electrode sheet under 1.80 g/cc compaction, an electrochemical device (especially a lithium-ion battery) including the negative electrode sheet can ensure excellent discharge capacity, fast charging performance, and cycle performance, and take into account excellent energy density, cycle performance, and storage performance.

DESCRIPTION OF THE EMBODIMENTS

The present disclosure is further described below by way of examples, but the present disclosure is not limited to the scope of the examples. The experimental methods in the following examples without specifying specific conditions are carried out according to conventional methods and conditions, or the specific conditions are selected according to the product specifications.

**Negative electrode sheet**

**In a negative electrode sheet provided in the first aspect of the invention,** the specific surface area decrease rate $P_0$ of the negative electrode sheet is 12% to 18%; wherein $P_0$ =1-P, P is the ratio of the specific surface area of the negative electrode sheet under the second compaction to the specific surface area of the negative electrode sheet under the first compaction;

the electrode sheet porosity $\varepsilon$ of the negative electrode sheet is 13% or more, wherein the electrode sheet porosity is the electrode sheet porosity of the negative electrode sheet under the second compaction;
the second compaction is 1.80 g/cc or the ultimate compaction of the negative electrode sheet; the first compaction is 1.65 g/cc.

In the invention, the specific surface area of the negative electrode sheet is obtained by testing according to the national standard GB/T 19587-2017.

In the invention, the "negative electrode sheet under the second compaction" can be obtained by the following method A or B:

method A: the negative electrode sheet is pressed to a compaction of 1.80 $g.cc^{-1}$ in a non-lithium-embedded state. The negative electrode sheet has a good appearance and no wavy edges;
method B: the negative electrode sheet is pressed to a compaction reaching the ultimate compaction in a non-lithium-embedded state. The negative electrode sheet has a good appearance and no wavy edges. At this time, the ultimate compaction is less than 1.80 $g.cc^{-1}$.

In the invention, the "negative electrode sheet under the first compaction" can be obtained by the following method: the negative electrode sheet is pressed to a compaction of 1.65 $g.cc^{-1}$ in a non-lithium-intercalated state, and the negative electrode sheet has a good appearance and no wavy edges.

In the invention, the specific surface decrease rate of the negative electrode sheet is a comprehensive result of the particle orientation, the tortuosity, and the inter-particle pores in the negative electrode sheet, and reflects the ability of the negative electrode sheet to maintain similar particle orientation, tortuosity, and inter-particle pores under extremely high compaction as under conventional compaction. The smaller the specific surface decrease rate of the negative electrode sheet, the more stable the structure of the negative electrode sheet; if the specific surface decrease rate of the negative electrode sheet is too small, the hardness of the negative electrode sheet is too large and the negative electrode sheet is difficult to deform, thus affecting the compaction of the negative electrode sheet.

In some preferred embodiments, the specific surface decrease rate of the negative electrode sheet is 13% to 17%, and the $P_0$ is, for example, 12.5%, 12.7%, 13.2%, 13.3%, 13.5%, 13.7%, 13.9%, 14.1%, 14.5%, 14.7%, 14.9%, 15%, 15.2%, 15.3%, 15.9%, 16.4%, 16.7%, 17.2%, 17.7%, or 17.8%.

In the invention, the electrode sheet porosity of the negative electrode sheet refers to the ratio of the volume of pores in the negative electrode sheet to the apparent volume of the negative electrode sheet.

In the invention, the porosity of the electrode sheet can be obtained by testing according to the national standard GB21650.1-2008.

In some preferred embodiments, the porosity of the negative electrode sheet under the second compaction is 18% to 26%, for example, 18.2%, 19.3%, 20.5%, 20.6%, 20.9%, 21.2%, 22.2%, 22.5%, 22.7%, 23.1%, 23.2%, 23.5%, 23.6%, 23.9%, 24.1%, 24.2%, 24.3%, 25.2%, or 25.6%.

In a specific embodiment, the negative electrode sheet satisfies: the specific surface decrease rate of the negative electrode sheet is 14.7%, and the electrode sheet porosity of the negative electrode sheet is 23.6%.

In a specific embodiment, the negative electrode sheet satisfies: the specific surface decrease rate of the negative electrode sheet is 12.5%, and the electrode sheet porosity of the negative electrode sheet is 25.2%.

In a specific embodiment, the negative electrode sheet satisfies: the specific surface decrease rate of the negative electrode sheet is 17.8%, and the electrode sheet porosity of the negative electrode sheet is 19.3%.

In a specific embodiment, the negative electrode sheet satisfies: the specific surface decrease rate of the negative electrode sheet is 13.2%, and the electrode sheet porosity of the negative electrode sheet is 24.1%.

In a specific embodiment, the negative electrode sheet satisfies: the specific surface decrease rate of the negative electrode sheet is 15.9%, and the electrode sheet porosity of the negative electrode sheet is 22.2%.

In a specific embodiment, the negative electrode sheet satisfies: the specific surface decrease rate of the negative electrode sheet is 13.9%, and the electrode sheet porosity of the negative electrode sheet is 23.9%.

In a specific embodiment, the negative electrode sheet satisfies: the specific surface decrease rate of the negative electrode sheet is 13.5%, and the electrode sheet porosity of the negative electrode sheet is 24.3%.

In a specific embodiment, the negative electrode sheet satisfies: the specific surface decrease rate of the negative electrode sheet is 16.4%, and the electrode sheet porosity of the negative electrode sheet is 20.5%.

In a specific embodiment, the negative electrode sheet satisfies: the specific surface decrease rate of the negative electrode sheet is 14.1%, and the electrode sheet porosity of the negative electrode sheet is 23.9%.

In a specific embodiment, the negative electrode sheet satisfies: the specific surface decrease rate of the negative electrode sheet is 15.2%, and the electrode sheet porosity of the negative electrode sheet is 24.2%.

In a specific embodiment, the negative electrode sheet satisfies: the specific surface decrease rate of the negative electrode sheet is 13.3%, and the electrode sheet porosity of the negative electrode sheet is 21.2%.

In a specific embodiment, the negative electrode sheet satisfies: the specific surface decrease rate of the negative electrode sheet is 17.2%, and the electrode sheet porosity of the negative electrode sheet is 20.6%.

In a specific embodiment, the negative electrode sheet satisfies: the specific surface decrease rate of the negative electrode sheet is 12.7%, and the electrode sheet porosity of the negative electrode sheet is 22.5%.

In a specific embodiment, the negative electrode sheet satisfies: the specific surface decrease rate of the negative electrode sheet is 12%, and the electrode sheet porosity of the negative electrode sheet is 25.6%.

In a specific embodiment, the negative electrode sheet satisfies: the specific surface decrease rate of the negative electrode sheet is 13.7%, and the electrode sheet porosity of the negative electrode sheet is 23.2%.

In a specific embodiment, the negative electrode sheet satisfies: the specific surface decrease rate of the negative electrode sheet is 16.7%, and the electrode sheet porosity of the negative electrode sheet is 20.9%.

In a specific embodiment, the negative electrode sheet satisfies: the specific surface decrease rate of the negative electrode sheet is 17.7%, and the electrode sheet porosity of the negative electrode sheet is 18.2%.

In a specific embodiment, the negative electrode sheet satisfies: the specific surface decrease rate of the negative electrode sheet is 15.3%, and the electrode sheet porosity of the negative electrode sheet is 22.7%.

In a specific embodiment, the negative electrode sheet satisfies: the specific surface decrease rate of the negative electrode sheet is 15%, and the electrode sheet porosity of the negative electrode sheet is 23.1%.

In a specific embodiment, the negative electrode sheet satisfies: the specific surface decrease rate of the negative electrode sheet is 14.9%, and the electrode sheet porosity of the negative electrode sheet is 23.5%.

In a specific embodiment, the negative electrode sheet satisfies: the specific surface decrease rate of the negative electrode sheet is 14.5%, and the electrode sheet porosity of the negative electrode sheet is 23.1%.

In the invention, the adhesive force $F_N$ of the negative electrode sheet refers to the connection strength between the active material layer and the current collector in the negative electrode sheet.

In some optional embodiments, the adhesive force $F_N$ of the negative electrode sheet is 25 N to 50 N, for example, 27 N, 28 N, 31 N, 32 N, 33 N, 34 N, 35 N, 38 N, 39 N, 40 N, 41 N, 43 N, or 45 N.

In the invention, the adhesive force of the negative electrode sheet is obtained by testing according to the following method: the negative electrode sheet to be tested is cut into a long strip (length×width=10 cm×3 cm), and is bonded to a long strip of quartz glass plate (slightly larger in area than the negative electrode sheet) to which a VHB tape is attached. The negative electrode sheet is repeatedly rolled three times with a special small round roller to ensure that the negative electrode sheet is fully adhered to the VHB. A universal stretching machine is adopted, and the standard method of measuring adhesive force at 180° is selected to test the size of the adhesive force of the negative electrode sheet. Each sample is tested three times and the average value is taken.

In an optional embodiment, the negative electrode sheet includes a negative electrode current collector, a first active material layer is disposed on at least one surface of the negative electrode current collector, a second active material layer is disposed on the first active material layer, the first active material layer includes a first graphite material and a first binder, the second active material layer includes a second graphite material and a second binder, and the Dv50 particle size of the first graphite material is greater than the Dv50 particle size of the second graphite material.

In a preferred embodiment, the difference between the Dv50 particle size of the first graphite material and the Dv50 particle size of the second graphite material is 3 $\mu$m to 7 $\mu$m, preferably 4.5 $\mu$m to 5.5 $\mu$m, for example 5 $\mu$m.

In a preferred embodiment, the particle crushing force $F_1$ of the first graphite material is 30 mN to 36 mN, for example, 31 mN, 33 mN, 34 mN, or 35 mN.

In a preferred embodiment, the particle crushing force $F_2$ of the second graphite material is 20 mN to 30 mN, for example, 22 mN, 24 mN, or 27 mN.

In the invention, the particle crushing force refers to the critical pressure at which a single particle of a material breaks when undergoing a compaction resistance test.

In the invention, the particle crushing force can be obtained by testing using the single particle mechanical properties testing system (SPFT2000) of INITIAL ENERGY SCIENCE & TECHNOLOGY Co., Ltd. (IEST). The specific testing method is as follows: 0.5 g of graphite material is added to a beaker containing 20 mL of anhydrous ethanol and ultrasonically dispersed for 5 minutes to obtain a dispersion; 100 $\mu$L of the dispersion is added dropwise onto a glass slide,

and the glass slide is transferred to the SPFT2000 sample observation platform; the single particle is positioned using the optical microscope of SPFT2000, and the pressure head is controlled to press down at a uniform speed, and the stress mutation point during the particle compaction process is recorded as the particle crushing force.

In a preferred embodiment, the carbon content of the first graphite material is 99.9% or more, and the percentage is the mass percentage of the first graphite material.

In a preferred embodiment, the carbon content of the second graphite material is 99.9% or more, and the percentage is the mass percentage of the first graphite material.

In a preferred embodiment, the Dv50 particle size of the first graphite material is 14 $\mu$m to 18 $\mu$m, for example, 16 $\mu$m.

In a preferred embodiment, the Dv50 particle size of the second graphite material is 9 $\mu$m to 13 $\mu$m, for example, 11 $\mu$m.

In a preferred embodiment, the first graphite material is a microcrystalline graphite material.

In a preferred embodiment, the second graphite material is a microcrystalline graphite material.

In a preferred embodiment, the content of the first binder is 1.3% to 1.8%, for example, 1.5%, and the percentage is the mass percentage of the first active material layer.

In a preferred embodiment, the content of the second binder is 0.7% to 1.2%, for example, 1.1%, and the percentage is the mass percentage of the second active material layer.

In particular, the types of the first binder and the second binder are not particularly limited, and can be independently selected from one or a plurality of polyvinylidene difluoride, polyvinylidene fluoride, polyvinyl alcohol, carboxymethyl cellulose, starch, hydroxypropyl cellulose, regenerated cellulose, polyvinyl pyrrolidone, polytetrafluoroethylene, polyethylene, polypropylene, polyacrylic acid (PAA), ethylene-propylene-diene terpolymer and sulfonate thereof, styrene-butadiene rubber (SBR), fluororubber, and various copolymers, such as SBR.

In a preferred embodiment, the content of the first graphite material is 20% or more, preferably 50% or more, for example, 96.2%, 96.5%, or 96.7%, and the percentage is the mass percentage of the first active material layer.

In a preferred embodiment, the content of the second graphite material is 20% or more, preferably 50% or more, for example, 96.3%, 96.8%, or 96.9%, and the percentage is the mass percentage of the second active material layer.

In a preferred embodiment, the mass ratio of the first active material layer to the second active material layer is 1:(0.4 to 2.5), for example, 1:0.43, 1:0.67, 1:1, 1:1.5, or 1:2.33.

In a preferred embodiment, the thickness of the first active material layer is 50 $\mu$m to 120 $\mu$m, for example, 55 $\mu$m.

In a preferred embodiment, the thickness of the second active material layer is 50 $\mu$m to 110 $\mu$m, for example, 55 $\mu$m.

In some embodiments, the first active material layer further includes a thickener. In particular, the content of the thickener is, for example, 1.2%, and the percentage is the mass percentage of the first active material layer.

In some embodiments, the second active material layer further includes a thickener. In particular, the content of the thickener is, for example, 1.2%, and the percentage is the mass percentage of the second active material layer.

In particular, the thickener may be a thickener conventionally used in the art for preparing a negative electrode sheet, such as sodium carboxymethyl cellulose (CMC).

In some embodiments, the first active material layer further includes a conductive agent. In particular, the content of the conductive agent is, for example, 0.8%, and the percentage is the mass percentage of the first active material layer.

In some embodiments, the second active material layer further includes a conductive agent. In particular, the content of the conductive agent is, for example, 0.8%, and the percentage is the mass percentage of the second active material layer.

In particular, there are no particular restrictions on the conductive agent, as long as the conductive agent has conductivity and does not cause chemical changes in the battery. For example, the conductive agent may be: graphite, such as natural graphite or artificial graphite; carbon-based material, such as carbon black (Super P), acetylene black, ketjen black, channel black, furnace black, lamp black, thermal black, or carbon fiber; metal powder or metal fiber, such as copper, nickel, aluminum, or silver; conductive whisker, such as zinc oxide whisker or potassium titanate whisker; conductive metal oxide, such as titanium dioxide; or conductive polymer, such as polyphenylene derivative, etc. The conductive agent is, for example, conductive carbon SP.

In some specific embodiments, in the first active material layer, the mass ratio of the first graphite material, the conductive agent, the first binder, and the thickener is 96.5:0.8:1.5:1.2.

In some specific embodiments, in the first active material layer, the mass ratio of the first graphite material, the conductive agent, the first binder, and the thickener is 96.7:0.8:1.3:1.2.

In some specific embodiments, in the first active material layer, the mass ratio of the first graphite material, the conductive agent, the first binder, and the thickener is 96.2:0.8:1.8:1.2.

In some specific embodiments, in the second active material layer, the mass ratio of the second graphite material, the conductive agent, the second binder, and the thickener is 96.9:0.8:1.1:1.2.

In some specific embodiments, in the second active material layer, the mass ratio of the second graphite material, the conductive agent, the second binder, and the thickener is 96.3:0.8:0.7:1.2.

In some specific embodiments, in the second active material layer, the mass ratio of the second graphite material, the conductive agent, the second binder, and the thickener is 96.8:0.8:1.2:1.2.

In the invention, the negative electrode current collector may be a conventional negative electrode current collector in the art. The negative electrode current collector is used as a substrate to support the first active material layer and the second active material layer, and is generally a metal foil having a thickness of 3 microns to 500 microns. There is no particular restriction on the material, as long as the negative electrode current collector has high conductivity and does not produce chemical reactions in the secondary battery system. For example, the negative electrode current collector can be a foil formed after surface treatment of nickel, titanium, aluminum, nickel, silver, stainless steel, carbon, etc. The negative electrode current collector is generally a smooth surface, but fine lines and the like may also be formed at the surface thereof to increase the adhesion between the first active material layer and the current collector. In addition to the foil, the negative electrode current collector may also be used in any one or a plurality of combinations of various forms such as film, mesh, porous, foam, or non-woven fabric, etc. In general, the negative electrode current collector is copper foil.

In a preferred embodiment, the preparation method of the negative electrode sheet includes the following steps:

S1, applying a first negative electrode slurry layer on at least one surface of the negative electrode current collector, and the first negative electrode slurry layer includes a first graphite material and a first binder;
S2, applying a second negative electrode slurry layer on the first negative electrode slurry layer, and the second negative electrode slurry layer includes a second graphite material and a second binder;
S3, performing drying and cold pressing to obtain the negative electrode sheet.

In some more preferred embodiments, the coating density of the first negative electrode slurry layer is greater than 0.055 g/cm$^2$, preferably greater than 0.14 g/cm$^2$, for example, 0.60 g/cm$^2$.

In some more preferred embodiments, the coating density of the second negative electrode slurry layer is greater than 0.055 g/cm$^2$, preferably greater than 0.14 g/cm$^2$, for example 0.60 g/cm$^2$.

In some more preferred embodiments, in step S1, the first graphite material is obtained by pre-treatment of a first graphite precursor, and the pre-treatment includes surface oxidation treatment and/or carboxylation treatment.

In some more preferred embodiments, in step S2, the second graphite material is obtained by pre-treatment of a second graphite precursor, and the pre-treatment includes surface oxidation treatment and/or carboxylation treatment.

In some preferred embodiments, the first graphite precursor may be microcrystalline graphite.

In some preferred embodiments, the second graphite precursor may be microcrystalline graphite.

**Microcrystalline graphite**

In the invention, the microcrystalline graphite preferably satisfies the following conditions: La≤72 nm, Lc≤15 nm; wherein La is the lattice constant of the graphite crystal in the microcrystalline graphite at the 110 plane, and Lc is the lattice constant of the graphite crystal in the microcrystalline graphite at the 002 plane; $F_p$≥15 mN, and $F_p$ is the particle crushing force.

In some preferred embodiments, La≤60 nm.

In some specific embodiments, the first graphite precursor is microcrystalline graphite, and the La is, for example, 68 nm, 70 nm, 71 nm, or 72 nm.

In some specific embodiments, the second graphite precursor is microcrystalline graphite, and the La is, for example, 66 nm, 68 nm, 69 nm, or 70 nm.

In some preferred embodiments, Lc≤12 nm.

In some specific embodiments, the first graphite precursor is microcrystalline graphite, and the Lc is, for example, 13 nm, 14 nm, or 15 nm.

In some specific embodiments, the second graphite precursor is microcrystalline graphite, and the Lc is, for example, 12 nm, 13 nm, or 14 nm.

In some preferred embodiments, 15 mN≤$F_p$≤25 mN.

In some specific embodiments, the first graphite precursor is microcrystalline graphite, and the $F_p$ is, for example, 23 mN or 25 mN.

In some specific embodiments, the second graphite precursor is microcrystalline graphite, and the $F_p$ is, for example, 20 mN or 21 mN.

In some preferred embodiments, the particle size distribution symmetry of the microcrystalline graphite satisfies 0<S≤0.1, preferably 0<S≤0.07.

In some specific embodiments, the first graphite precursor is microcrystalline graphite, and the particle size distribution symmetry is, for example, 0.012, 0.023, 0.035, or 0.038.

In some specific embodiments, the second graphite precursor is microcrystalline graphite, and the particle size distribution symmetry is, for example, 0.028, 0.032, 0.046, or 0.052.

In some preferred embodiments, the sphericity of the microcrystalline graphite is preferably 0.5 to 1.0.

In some specific embodiments, the first graphite precursor is microcrystalline graphite, and the sphericity of the microcrystalline graphite is, for example, 0.90 or 0.91.

In some specific embodiments, the second graphite precursor is microcrystalline graphite, and the sphericity of the microcrystalline graphite is, for example, 0.88 or 0.89.

In some preferred embodiments, the carbon content of the microcrystalline graphite is 99.9% or more, and the percentage is the mass percentage of the microcrystalline graphite.

In a preferred embodiment, the Dv50 particle size of the first graphite precursor is 14 $\mu$m to 18 $\mu$m, for example, 16 $\mu$m.

In a preferred embodiment, the Dv50 particle size of the second graphite precursor is 9 $\mu$m to 13 $\mu$m, for example, 11 $\mu$m.

In particular, the La is obtained by calculating $La = \frac{1.84\lambda}{\beta cos\theta}$, wherein $\lambda$ is 0.0027 nm, *b* is the half-peak width, and θ is obtained by calculating $d(110) = \frac{\lambda}{2sin\theta}$; wherein the specific test method of b and d(110) is as follows: the graphite material and 50 mL of n-hexane are added into a beaker to perform ultrasonic oscillation for 5 minutes, then 100 $\mu$L of solution is drawn using a pipette and added dropwise onto the TEM observation copper grid, and the copper grid after rapid drying is observed; diffraction observation calibration was selected using TEM to obtain b and d(110).

In particular, the Lc is obtained by calculating $Lc = \frac{0.9\lambda}{\beta cos\theta'}$. In particular, $\lambda$ is 0.0027 nm, $\beta$ is the half-peak width, and θ' is obtained by calculating $d(002) = \frac{\lambda}{2sin\theta'}$; wherein the specific test method of b and d(002) is as follows: the graphite material and 50 mL of n-hexane are added into a beaker to perform ultrasonic oscillation for 5 minutes, then 100 $\mu$L of solution is drawn using a pipette and added dropwise onto the TEM observation copper grid, and the copper grid after rapid drying is observed; diffraction observation calibration was selected using TEM to obtain b and d(002).

In particular, the particle crushing force ($F_p$) refers to the critical pressure at which a single particle of the material breaks when subjected to a compaction test. The particle crushing force can be obtained by testing using the single particle mechanical properties testing system (SPFT2000) of INITIAL ENERGY SCIENCE & TECHNOLOGY Co., Ltd. (IEST). The specific testing method is as follows: 0.5 g of graphite material is added to a beaker containing 20 mL of anhydrous ethanol and ultrasonically dispersed for 5 minutes to obtain a dispersion; 100 $\mu$L of the dispersion is added dropwise onto a glass slide, and the glass slide is transferred to the SPFT2000 sample observation platform; the single particle is positioned using the optical microscope of SPFT2000, and the pressure head is controlled to press down at a uniform speed, and the stress mutation point during the particle compaction process is recorded as the particle crushing force.

In particular, the particle size distribution symmetry (S) is obtained by calculating [D(3,4)-Dv50]/Dv50; wherein D (3,4) and Dv50 are obtained by testing according to GB/T 41949-2022. The smaller the particle size distribution symmetry, the better the particle size distribution symmetry, and the higher the peak of the differential curve of the particle size distribution.

In particular, the sphericity (D) refers to the ratio of the surface area of a sphere with the same volume as the material particle to the surface area of the material particle. In general, the closer the particle is to a sphere in appearance, the closer the sphericity thereof is to 1. The sphericity of a sphere is equal to 1, and the sphericity of other objects is less than 1. The sphericity is tested in accordance with GB/T 37406-2019.

In some specific embodiments, the preparation method of the microcrystalline graphite includes the following steps:

① performing a first mixing on a microcrystalline graphite precursor and a binder, and adding a solvent to perform a second mixing to obtain a mixture; wherein a temperature of the first mixing is 5 °C to 20 °C below a softening point of the binder;
② pressing the mixture to obtain a microcrystalline graphite rough blank;
③ laying the microcrystalline graphite rough blank at a surface of a graphitization furnace, laying a graphitized thermal insulation material on the microcrystalline graphite rough blank, and performing a graphitization treatment, and the microcrystalline graphite rough blank is subjected to a graphitization treatment to obtain a microcrystalline graphite blank body;
④ performing a crushing treatment on the microcrystalline graphite blank body.

In particular, optionally, the temperature of the first mixing is 8 °C to 15 °C below the softening point of the binder, for example, 10 °C.

In particular, optionally, in step ①, the fixed carbon content of the microcrystalline graphite precursor is 88% to 91%.

In particular, optionally, in step ①, the Dv50 particle size of the microcrystalline graphite precursor is 6 $\mu$m to 8 $\mu$m, for example, 7 $\mu$m.

In particular, optionally, in step ①, the mass ratio of the microcrystalline graphite precursor to the binder is (2 to 7):1, preferably (4 to 7):1, for example, 5:2.

In particular, optionally, in step ①, the binder includes one or a plurality of petroleum asphalt, phenolic resin, epoxy resin, and coal tar.

In particular, optionally, in step ①, the softening point of the binder is 100 °C to 250 °C, preferably 100 °C to 130 °C, for example 110 °C.

In particular, optionally, in step ①, the solvent is selected from one or a plurality of xylene, toluene, and n-hexane.

In particular, optionally, in step ①, the solid content of the mixture is 40% to 60%, for example, 45%, and the percentage is the mass percentage of the solid component of the mixture to the mass percentage of the mixture.

In particular, optionally, in step ①, the method of the first mixing is stirring; wherein the time of the stirring is preferably 0.5h to 2h, for example 1h; and the speed of the stirring is preferably 30 r/min to 90 r/min.

In particular, optionally, in step ①, the method of the second mixing is stirring; wherein the time of the stirring is preferably 0.5h to 2h, for example 1h; the speed of the stirring is preferably 60 r/min to 120 r/min; and the temperature of the stirring is preferably room temperature.

In particular, optionally, in step ①, the preparation method of the microcrystalline graphite precursor includes the following steps: the microcrystalline graphite ore is washed and floated, and then coarse crushing and spheroidization treatment are performed to obtain a graphite precursor; wherein the time of the spheroidization treatment is preferably 4h to 24h; and the spheroidization treatment is preferably performed using a honeycomb mill.

In particular, optionally, in step ②, the pressing is isostatic pressing; wherein the time of the isostatic pressing is preferably 18 hours to 30 hours, for example, 24 hours; the pressure of the isostatic pressing is preferably 150 MPa to 300 MPa, for example, 200 MPa.

In particular, optionally, in step ③, the temperature of the graphitization treatment is greater than 1600 °C.

In particular, optionally, in step ③, the time of the graphitization treatment is 18h to 40h, preferably 24h to 36h.

In particular, optionally, in step ③, the graphitized thermal insulation material is petroleum coke and/or asphalt coke.

In particular, optionally, in step ③, the graphitization equipment is a graphitization furnace.

In particular, optionally, in step ④, the pulverizing treatment further includes screening and magnetic impurity removal.

## Electrochemical Device

**The electrochemical device provided in the second aspect of the present disclosure** includes the negative electrode sheet.

In the invention, the electrochemical device is preferably a battery.

In an optional embodiment, the electrochemical device is a lithium-ion battery; the lithium-ion battery includes the negative electrode sheet, a positive electrode sheet, a separator, and an electrolyte.

## Positive electrode sheet

In the invention, the positive electrode sheet includes a positive electrode current collector and a positive electrode active material layer disposed at at least one surface of the positive electrode current collector.

In the invention, the positive electrode active material in the positive electrode active material layer may be a positive electrode active material conventionally used in the art, such as one or a plurality of lithium nickel cobalt manganese oxide, lithium nickel manganese oxide, lithium iron phosphate, lithium manganese iron phosphate, and lithium cobalt oxide.

In some optional embodiments, the positive electrode active material layer further includes a binder.

In particular, the type of the binder is not particularly limited, and can be selected from one or a plurality of polyvinylidene difluoride, polyvinylidene fluoride (PVDF), polyvinyl alcohol, carboxymethyl cellulose, starch, hydroxypropyl cellulose, regenerated cellulose, polyvinyl pyrrolidone, polytetrafluoroethylene, polyethylene, polypropylene, polyacrylic acid (PAA), ethylene-propylene-diene terpolymer and sulfonate thereof, styrene-butadiene rubber (SBR), and fluororubber, and various copolymers, such as PVDF.

In some optional embodiments, the content of the binder is 1% to 10%, for example, 1.8%, and the percentage is the mass percentage of the positive electrode active material layer.

In some optional embodiments, the positive electrode active material layer further includes a conductive agent.

In particular, the type of the conductive agent is not particularly limited, and is a reagent used to ensure that the electrode has good charge and discharge performance. The conductive agent can be selected from graphite material such as natural graphite and artificial graphite, carbon black material such as carbon black SP, acetylene black, Ketjen black, channel black, furnace black, lamp black, thermal black, conductive fiber such as carbon fiber, metal fiber, metal powder such as carbon fluoride powder, aluminum powder, nickel powder, conductive whisker such as zinc oxide, potassium titanate, and conductive metal oxide such as titanium dioxide, or polyphenylene derivative.

In a specific embodiment, the conductive agent is conductive carbon SP.

In some optional embodiments, the content of the conductive agent is 0.2% to 3%, for example, 1.2%, and the percentage is the mass percentage of the positive electrode active material layer.

In some specific embodiments, in the positive electrode active material layer, the mass ratio of the positive electrode active material, the conductive agent, and the binder is 97:1.2:1.8.

In the invention, the positive electrode current collector may be a conventional positive electrode current collector in the art. The positive electrode current collector is used as a substrate to support the positive electrode active material layer, and is generally a metal foil having a thickness of 3 microns to 500 microns. There is no particular restriction on the material, as long as the positive electrode current collector has high conductivity and does not produce chemical reactions in the secondary battery system. For example, the positive electrode current collector can be a foil formed after surface treatment of nickel, titanium, aluminum, nickel, silver, stainless steel, carbon, etc. The positive electrode current collector is generally a smooth surface, but fine lines may also be formed at the surface thereof to increase the adhesion between the positive electrode active material layer and the current collector. In addition to the foil, the positive electrode current collector may also be used in any one or a plurality of combinations of various forms such as film, mesh, porous, foam, or non-woven fabric. In general, the positive electrode current collector is aluminum foil.

In some embodiments, the preparation method of the positive electrode sheet includes: the components of the positive electrode active material layer are fully stirred and mixed in a solvent to obtain a positive electrode slurry, the positive electrode slurry is coated on at least one surface of the positive electrode collector, then dried, and rolled and compacted to obtain the positive electrode slurry.

In some optional embodiments, the solvent includes one or a plurality of N-methylpyrrolidone (NMP), dimethyl carbonate, ethylene carbonate, and diethylene carbonate, for example, NMP.

**Separator**

In the invention, the separator in the battery cell may be a separator conventionally used in the art.

In some optional embodiments, the separator may adopt polypropylene film or polyethylene film.

In particular, the air permeability of the separator may be 180 s/100 mL to 380 s/100 mL.

In particular, the porosity of the separator may be 30% to 50%.

In particular, the thickness of the separator may be 9 $\mu$m to 18 $\mu$m.

In a specific embodiment, the separator is a polyethylene film; the thickness of the separator is 11 $\mu$m; the air permeability of the separator is 230 s/100 mL; and the porosity of the separator is 40%.

Electrolyte

In some embodiments, the electrolyte may be an electrolyte conventionally used for batteries in the art, generally including a non-aqueous solvent, a lithium salt, and an additive.

In some embodiments, the preparation method of the lithium-ion battery includes the following steps: the positive electrode sheet, the separator, and the negative electrode sheet are stacked in sequence, so that the separator is located between the positive and negative electrode sheets to play an isolating role; then an aluminum-plastic film is wrapped outside, the electrolyte is injected after drying, and lastly a soft-pack battery is prepared via a process such as packaging, leaving to stand, formation.

**Electronic equipment**

**The electronic equipment provided in the third aspect of the present disclosure** includes the electrochemical device.

Exemplarily, the electronic equipment of the present disclosure may be, but is not limited to, a mobile equipment (such as a mobile phone, a tablet computer, a laptop computer, a video recorder, a portable printer/copier, etc.), an electric vehicle (such as a pure electric vehicle, a hybrid electric vehicle, a plug-in hybrid electric vehicle, an electric bicycle, an electric scooter, an electric golf cart, an electric truck, etc.), an electric train, a ship and a satellite, an energy storage system, and a backup power supply, etc.

On the basis of being in accordance with the common sense in the art, the above preferred conditions can be arbitrarily combined to obtain the preferred embodiments of the invention.

The reagents and raw materials used in the present disclosure are all commercially available.

**Example 1**

1. Preparation of the first graphite material and the second graphite material

(1) Preparing a first graphite precursor and a second graphite precursor:

① the microcrystalline graphite ore (purchased from Lutang Graphite Processing Plant in Chenzhou, Hunan Province, model was first-class earthy graphite, the carbon content of the original ore was >85%) was subjected to preliminary water washing and flotation to make the fixed carbon content thereof reach 90%, and after coarse crushing, spheroidization treatment was performed by using a honeycomb mill for 6h to obtain a microcrystalline graphite precursor with a sphericity of 0.83 (Dv50 particle size was 7 $\mu$m); the above microcrystalline graphite precursor was mixed with petroleum asphalt with a softening point of 110 °C (purchased from Liaoning Xinde New Materials Technology Co., Ltd., model was XD-110) at a mixing mass ratio of 5:2, the mixture was heated to 10 °C below the softening point (100 °C) and stirred for 1h (stirring speed was 15 r/min to 20 r/min), and then an appropriate amount of xylene solvent was added to assist the dispersion of the petroleum asphalt, and stirring was continued for 1h to obtain a mixture (solid content was 45%);

② then, the mixture was added into a 40×30 cm×30 cm rubber mold, and isostatically pressed at 200 MPa for 24h, and then demolded to obtain a microcrystalline graphite rough blank;

③ the microcrystalline graphite rough blank was laid at the surface of the Acheson graphitization furnace as a graphitization insulation material, and then a layer of petroleum coke was laid for graphitization. The graphitization temperature was 3000 °C and the graphitization time was 36h; wherein the microcrystalline graphite rough blank formed a microcrystalline graphite blank body.

④ The microcrystalline graphite blank was taken out and crushed, first filtered with a 250-mesh screen, and then sieved with a 325-mesh screen after shaping. The unsieved portion was recorded as material A, and the sieved portion was recorded as material B;

material A was crushed, shaped, sieved, and magnetically impurized, and the Dv50 particle size was controlled to be 16 $\mu$m to obtain the first graphite precursor (carbon content was 99.9%, La was 70 nm, Lc was 14 nm, particle crushing force $F_p$ was 23 mN, particle size distribution symmetry S was 0.023, and sphericity D was 0.90);

material B was crushed, shaped, sieved, and magnetically impurized, and the Dv50 particle size was controlled to be 11 $\mu$m to obtain a second graphite precursor (carbon content was 99.9%, La was 68 nm, Lc was 13 nm, particle crushing force $F_p$ was 20 mN, particle size distribution symmetry S was 0.032, and sphericity D was 0.88).

(2) The first graphite precursor and the second graphite precursor obtained above were subjected to surface oxidation treatment and carboxylation treatment respectively, and the specific steps were as follows:

S0-1, surface oxidation treatment: the first graphite precursor was placed in a rotary kiln, and air was introduced at a temperature of 800 °C for surface oxidation treatment for 1 hour; in addition, the second graphite precursor was placed in a rotary kiln, and air was introduced at a temperature of 800 °C for surface oxidation treatment for 20 minutes;

S0-2, carboxylation treatment:

20 L of chloroacetic acid solution with a concentration of 5 mol/L was prepared, and then 3 kg of the first graphite precursor subjected to surface oxidation treatment was added, the temperature was raised to 60 °C and stirring was performed for 8h, the powder was collected after filtration, and then the temperature was raised to 240 °C at 2 °C/min under vacuum, and then kept warm for 2h to obtain a first graphite material (Dv50 particle size was 16 $\mu$m, carbon content was 99.9%);

20 L of 2 mol/L chloroacetic acid solution was prepared, then 3 kg of the second graphite precursor treated with surface oxidation was added, the mixture was heated to 60 °C and stirred for 8h, the above powder was collected after filtration, then heated to 240 °C at 2 °C /min under vacuum, and then kept warm for 2h to obtain a second graphite material (Dv50 particle size was 11 $\mu$m, carbon content was 99.9%).

2. Preparation of negative electrode sheet

S1, after the resulting first graphite material, conductive agent (conductive carbon SP), first binder SBR, and thickener CMC were mixed in a mass ratio of 96.5:0.8:1.5:1.2 (a total of 100 parts by mass), 82 parts by mass of deionized water was added and mixed evenly to obtain a first negative electrode slurry; the first negative electrode slurry was coated on a copper foil to form a first negative electrode slurry layer (coating density was 0.60 g/cm$^2$);

S2, the resulting second graphite material, conductive agent (conductive carbon SP), second binder SBR, and thickener CMC were mixed in a mass ratio of 96.9:0.8:1.1:1.2 (a total of 100 parts by mass), 82 parts by mass of deionized water was added, and the above was mixed evenly to obtain a second negative electrode slurry; and then the second negative electrode slurry was coated on the first negative electrode slurry layer to form a second negative electrode slurry layer (coating density was 0.60 g/cm$^2$);

S3, after drying, cold pressing was performed once to form a first compaction, and then cold pressing was performed twice to form a second compaction to obtain a negative electrode sheet; wherein the first negative electrode slurry layer formed a first active material layer, the second negative electrode slurry layer formed a second active material layer, the mass ratio of the first active material layer to the second active material layer was 5:5, and the thickness of the first active material layer and the second active material layer were both 55 $\mu$m.

3. Preparation of lithium-ion battery

The positive electrode sheet, the separator, and the negative electrode sheet were wound to obtain a battery cell, the battery cell was then packaged in a packaging housing and injected with electrolyte to obtain a soft-pack battery.

In particular, the preparation of the positive electrode sheet included the following steps: the positive electrode active material NCM622, PVDF, and conductive carbon SP were mixed in a mass ratio of 97:1.8:1.2 (a total of 100 parts by mass), 82 parts by mass of NMP was added to obtain a positive electrode slurry; the resulting positive electrode slurry was coated on at least one surface of an aluminum foil, then drying, and rolling and compacting were performed to obtain the positive electrode sheet.

In particular, the separator was a polyethylene film; the thickness of the separator was 11 $\mu$m; the air permeability of the separator was 230 s/100 mL; and the porosity of the separator was 40%.

In particular, the electrolyte adopted was commercial electrolyte (the manufacturer was Shanshan New Material (Quzhou) Co., Ltd., model E3).

**Example 2**

The only difference between Example 2 and Example 1 was that in the preparation of the first graphite material and the second graphite material, in step S0-1, the temperature of the surface oxidation treatment was 600 °C, and the other conditions were the same as in Example 1.

**Example 3**

The only difference between Example 3 and Example 1 was that in the preparation of the first graphite material and the second graphite material, in step S0-1, the temperature of the surface oxidation treatment was 1000 °C, and the other conditions were the same as in Example 1.

**Example 4**

The only difference between Example 4 and Example 1 was that in the preparation of the first graphite material and the second graphite material, in step S0-1, the time of the surface oxidation treatment of the first graphite precursor was 0.5 h, and the other conditions were the same as in Example 1.

**Example 5**

The only difference between Example 5 and Example 1 was that in the preparation of the first graphite material and the second graphite material, in step S0-1, the time of the surface oxidation treatment of the second graphite precursor was 30 minutes, and the other conditions were the same as in Example 1.

**Example 6**

The only difference between Example 6 and Example 1 was that in the preparation of the first graphite material and the second graphite material, in step S0-1, the surface oxidation treatment time of the second graphite precursor was 10 minutes, and the other conditions were the same as in Example 1.

**Example 7**

The only difference between Example 7 and Example 1 was that in the preparation of the first graphite material and the second graphite material, in step S0-2, the concentration of chloroacetic acid was 4 mol/L, and the other conditions were the same as in Example 1.

**Example 8**

The only difference between Example 8 and Example 1 was that in the preparation of the first graphite material and the second graphite material, in step S0-3, the concentration of chloroacetic acid was 3 mol/L, and the other conditions were the same as in Example 1.

**Example 9**

The only difference between Example 9 and Example 1 was that in the preparation of the first graphite material and the second graphite material, in step S0-3, the concentration of chloroacetic acid was 1.5 mol/L, and the other conditions were the same as in Example 1.

**Example 10**

The only difference between Example 10 and Example 1 was that in the preparation of the negative electrode sheet, in step S1, the mass ratio of the first graphite material, the conductive agent, the first binder, and the thickener was 96.7:0.8:1.3:1.2, and the other conditions were the same as in Example 1.

**Example 11**

The only difference between Example 11 and Example 1 was that in the preparation of the negative electrode sheet, in step S1, the mass ratio of the first graphite material, the conductive agent, the first binder, and the thickener was 96.2:0.8:1.8:1.2, and the other conditions were the same as in Example 1.

**Example 12**

The only difference between Example 12 and Example 1 was that in the preparation of the negative electrode sheet, in step S2, the mass ratio of the second graphite material, the conductive agent, the second binder, and the thickener was 96.3:0.8:0.7:1.2, and the other conditions were the same as in Example 1.

**Example 13**

The only difference between Example 13 and Example 1 was that in the preparation of the negative electrode sheet, in step S2, the mass ratio of the second graphite material, the conductive agent, the second binder, and the thickener was 96.8:0.8:1.2:1.2, and the other conditions were the same as in Example 1.

**Example 14**

The only difference between Example 14 and Example 1 was that in the preparation of the negative electrode sheet, in step S3, the mass ratio of the first active material layer to the second active material layer was 3:7, and the other conditions were the same as in Example 1.

**Example 15**

The only difference between Example 15 and Example 1 was that in the preparation of the negative electrode sheet, in step S3, the mass ratio of the first active material layer to the second active material layer was 4:6, and the other conditions were the same as in Example 1.

**Example 16**

The only difference between Example 16 and Example 1 was that in the preparation of the negative electrode sheet, in step S3, the mass ratio of the first active material layer to the second active material layer was 6:4, and the other conditions were the same as in Example 1.

**Example 17**

The only difference between Example 17 and Example 1 was that in the preparation of the negative electrode sheet, in step S3, the mass ratio of the first active material layer to the second active material layer was 7:3, and the other conditions were the same as in Example 1.

**Example 18**

The difference between Example 18 and Example 1 was that in the preparation of the first graphite precursor and the second graphite precursor, in step ④, material A was crushed, shaped, sieved, and magnetically impurized, and the Dv50 particle size was controlled to be 18 $\mu$m to obtain a first graphite precursor (carbon content was 99.9%, La was 71 nm, Lc was 15 nm, particle crushing force $F_p$ was 25 mN, particle size distribution symmetry S was 0.012, and sphericity D was 0.91). The other conditions were the same as in Example 1.

**Example 19**

The difference between Example 19 and Example 1 was that in the preparation of the first graphite precursor and the second graphite precursor, in step ④, material B was crushed, shaped, sieved, and magnetically impurized, and the Dv50 particle size was controlled to be 13 $\mu$m to obtain a second graphite precursor (carbon content was 99.9%, La was 69 nm, Lc was 14 nm, particle crushing force $F_p$ was 21 mN, particle size distribution symmetry S was 0.028, and sphericity D was 0.89). The other conditions were the same as in Example 1.

**Example 20**

The difference between Example 20 and Example 1 was that in the preparation of the first graphite precursor and the second graphite precursor, in step ①, the mixture was heated to 5 °C below the softening point (105 °C) and stirred for 1 hour. The other conditions were the same as in Example 1.

The carbon content of the resulting first graphite precursor was 99.9%, La was 68 nm, Lc was 13 nm, the particle crushing force $F_p$ was 23 mN, the particle size distribution symmetry S was 0.035, and the sphericity D was 0.90; the carbon content of the resulting second graphite precursor was 99.9%, La was 66 nm, Lc was 12 nm, the particle crushing force $F_p$ was 20 mN, the particle size distribution symmetry S was 0.046, and the sphericity D was 0.88.

**Example 21**

The difference between Example 21 and Example 1 was that in the preparation of the first graphite precursor and the second graphite precursor, in step ①, the mixture was heated to 20 °C (90 °C) below the softening point and stirred for 1 hour. The other conditions were the same as in Example 1.

The carbon content of the resulting first graphite precursor was La was 72 nm, Lc was 15 nm, the particle crushing force $F_p$ was 23 mN, the particle size distribution symmetry S was 0.038, and the sphericity D was 0.90; the carbon content of the resulting second graphite precursor was 99.9%, La was 70 nm, Lc was 13 nm, the particle crushing force $F_p$ was 20 mN, the particle size distribution symmetry S was 0.052, and the sphericity D was 0.88.

**Comparative example 1**

The only difference between this comparative example and Example 1 was that in the preparation of the negative electrode sheet, in step S0-1, the temperature of the surface oxidation treatment was 500 °C, and the other conditions were the same as in Example 1.

**Comparative example 2**

The only difference between this comparative example and Example 1 was that in the preparation of the negative electrode sheet, in step S0-1, the temperature of the surface oxidation treatment was 1100 °C, and the other conditions were the same as in Example 1.

**Comparative example 3**

The only difference between this comparative example and Example 1 was that in the preparation of the negative electrode sheet, in step S0-1, the time for the surface oxidation treatment of the first graphite precursor was 0.2h, and the other conditions were the same as in Example 1.

**Comparative example 4**

The only difference between this comparative example and Example 1 was that in the preparation of the negative electrode sheet, in step S0-1, the time for the surface oxidation treatment of the second graphite precursor was 5 minutes, and the other conditions were the same as in Example 1.

**Comparative example 5**

The only difference between this comparative example and Example 1 was that in the preparation of the negative electrode sheet, in step S0-1, the time of the surface oxidation treatment of the second graphite precursor was 40 minutes, and the other conditions were the same as in Example 1.

**Comparative example 6**

The only difference between this comparative example and Example 1 was that in the preparation of the negative electrode sheet, in step S0-1, the second graphite precursor was not subjected to surface oxidation treatment, and the other conditions were the same as in Example 1.

**Comparative example** 7

The only difference between this comparative example and Example 1 was that in the preparation of the negative electrode sheet, in step S0-2, the concentration of chloroacetic acid was 2 mol/L, and the other conditions were the same as in Example 1.

**Comparative example 8**

The only difference between this comparative example and Example 1 was that in the preparation of the negative electrode sheet, in step S0-3, the concentration of chloroacetic acid was 5 mol/L, and the other conditions were the same as in Example 1.

**Comparative example 9**

The only difference between this comparative example and Example 1 was that in the preparation of the negative electrode sheet, in step S0-3, the concentration of chloroacetic acid was 1 mol/L, and the other conditions were the same as in Example 1.

**Comparative example 10**

The only difference between this comparative example and Example 1 was that in the preparation of the negative electrode sheet, in step S1, the mass ratio of the first graphite material, the conductive agent, the first binder, and the thickener was 96.0:0.8:2.0:1.2, and the other conditions were the same as in Example 1.

**Comparative example 11**

The only difference between this comparative example and Example 1 was that in the preparation of the negative electrode sheet, in step S1, the mass ratio of the first graphite material, the conductive agent, the first binder, and the thickener was 96.9:0.8:1.1:1.2, and the other conditions were the same as in Example 1.

**Comparative example 12**

The only difference between this comparative example and Example 1 was that in the preparation of the negative electrode sheet, in step S2, the mass ratio of the second graphite material, the conductive agent, the second binder, and the thickener was 96.7:0.8:1.3:1.2, and the other conditions were the same as in Example 1.

**Comparative example 13**

The only difference between this comparative example and Example 1 was that in the preparation of the negative electrode sheet, in step S2, the mass ratio of the second graphite material, the conductive agent, the second binder, and the thickener was 97.5:0.8:0.5:1.2, and the other conditions were the same as in Example 1.

**Comparative example 14**

The only difference between this comparative example and Example 1 was that in the preparation of the negative electrode sheet, only the second negative electrode slurry was coated on the negative electrode current collector to obtain the second active material layer (thickness was 110 $\mu$m), without the first active material layer. The other conditions were the same as in Example 1.

**Comparative example 15**

The only difference between this comparative example and Example 1 was that in the preparation of the negative electrode sheet, only the first negative electrode slurry was coated on the negative electrode current collector to obtain the first active material layer (thickness was 110 $\mu$m), without the second active material layer. The other conditions were the same as in Example 1.

**Comparative example 16**

The difference between this comparative example and Example 1 was that in the preparation of the negative electrode sheet, step S1 and step S2 were replaced by the following steps:

S1, after the resulting second graphite material, conductive agent (conductive carbon SP), second binder SBR, and thickener CMC were mixed in a mass ratio of 96.9:0.8:1.1:1.2 (a total of 100 parts by mass), 82 parts by mass of deionized water was added and mixed evenly to obtain a second negative electrode slurry; and then the second negative electrode slurry was coated on a copper foil to form a second negative electrode slurry layer (coating density was 0.60 g/cm$^2$);

S2, the resulting first graphite material, conductive agent (conductive carbon SP), first binder SBR, and thickener CMC were mixed in a mass ratio of 96.5:0.8:1.5:1.2 (a total of 100 parts by mass), and 82 parts by mass of deionized water was added, and the above was mixed evenly to obtain a first negative electrode slurry; the first negative electrode slurry was coated on the second negative electrode slurry layer to form a first negative electrode slurry layer (coating density was 0.60 g/cm$^2$).

The remaining conditions were the same as in Example 1.

**Comparative example 17**

The difference between this comparative example and Example 1 was that the preparation of the negative electrode sheet was replaced by the following steps:

S1, the resulting first graphite material, conductive agent (conductive carbon SP), first binder SBR, and thickener CMC were mixed in a mass ratio of 96.5:0.8:1.5:1.2 (a total of 100 parts by mass), 82 parts by mass of deionized water was added, and the above was mixed evenly to obtain a first negative electrode slurry;

S2, the resulting second graphite material, conductive agent (conductive carbon SP), second binder SBR, and thickener CMC were mixed in a mass ratio of 96.9:0.8:1.1:1.2 (a total of 100 parts by mass), 82 parts by mass of deionized water was added, and the above was mixed evenly to obtain a second negative electrode slurry;

after the first negative electrode slurry and the second negative electrode slurry were mixed, the mixture was coated on the copper foil to form a negative electrode slurry layer (coating density was 0.60 g/cm$^2$);
S3, drying was performed, and then cold pressing was performed once to obtain a negative electrode sheet under a first compaction, and then cold pressing was performed twice to obtain a negative electrode sheet under a second compaction; wherein the negative electrode slurry layer formed an active material layer with a thickness of 110 $\mu$m.

The other conditions were the same as in Example 1.

**Comparative example 18**

The difference between this comparative example and Example 1 was that in the preparation of the negative electrode sheet, a commercial graphite material (purchased from Shanghai Shanshan Technology Co., Ltd., model FSN-1) was adopted as the negative electrode material. The specific preparation process was as follows:

the graphite material, the conductive agent (conductive carbon SP), the binder SBR, and the thickener CMC were mixed in a mass ratio of 96.5:0.8:1.5:1.2 (a total of 100 parts by mass), and 82 parts by mass of deionized water was added, and the above was mixed evenly to obtain a negative electrode slurry; the negative electrode slurry was coated on a copper foil to form a negative electrode slurry layer (coating density was 0.60 g/cm$^2$);
drying was performed, and then cold pressing was performed once to obtain a negative electrode sheet under the first compaction, and then cold pressing was performed twice to obtain a negative electrode sheet under the second compaction; wherein the negative electrode slurry layer formed an active material layer with a thickness of 110 $\mu$m.

The other conditions were the same as in Example 1.

**Comparative example 19**

The difference between this comparative example and Example 1 was that in the preparation of the negative electrode sheet, commercial microcrystalline graphite (particle size was 6.7 $\mu$m, particle crushing force was 14 mN, purchased from Shenzhen BTR New Energy Materials Co., Ltd., model number was WJ-1) was adopted to replace the first graphite material and the second graphite material, and the other conditions were the same as in Example 1.
Some parameters of Examples 1 to 21 and Comparative examples 1 to 19 are shown in Table 1.

**Effect Example 1**

The first graphite precursor and the second graphite precursor in Examples 1, 18 to 19 and 20 to 21 were tested for lattice constants La, Lc, particle crushing force, particle size distribution symmetry S, and sphericity D, and the first graphite material and the second graphite material in Examples 1 to 21 and Comparative examples 1 to 19 were tested for particle crushing force. The specific test method was as follows:

(1) Lattice constants La and Lc:
the resulting sample to be tested was used as the test sample. The sample to be tested and 50 mL of n-hexane were added to a beaker and ultrasonically oscillated for 5 minutes. Then, 100 $\mu$L of the solution was drawn with a pipette and added dropwise onto the TEM observation copper grid. The copper grid was rapidly dried and then observed.

Diffraction observation and calibration were selected using TEM to obtain d(110) and half-peak width $\beta$ of the sample, and then according to $d(110) = \frac{\lambda}{2sin\theta}$, wherein $\lambda$ was 0.0027 nm, θ could be obtained by calculation; then $La = \frac{1.84\lambda}{\beta cos\theta}$;
diffraction observation and calibration were selected using TEM to obtain to obtain d(002) and half-peak width $\beta$ of the sample, and then according to $d(002) = \frac{\lambda}{2sin\theta'}$, wherein $\lambda$ was 0.0027 nm, θ' could be obtained by calculation, then $Lc = \frac{0.9\lambda}{\beta cos\theta'}$.

(2) Particle size distribution symmetry S

With reference to GB/T 41949-2022, the graphite material was tested using a laser particle size diffractometer (Malvern 3000). The D(3,4) and Dv50 particle size data were directly read from the test results, and S was obtained by calculation according to S=[D(3,4)-Dv50]/Dv50.

(3) Sphericity D

The sphericity was tested in accordance with GB/T 37406-2019.

(4) Particle crushing force

The test of the particle crushing force was performed using the single particle mechanical properties testing system (SPFT2000) of INITIAL ENERGY SCIENCE & TECHNOLOGY Co., Ltd. (IEST)., as follows:
0.5 g of the sample powder to be tested was added into a beaker containing 20 ml of anhydrous ethanol and ultrasonically dispersed for 5 min to obtain a dispersion. 100 $\mu$L of the dispersion was added dropwise onto a glass slide and the glass slide was transferred to the SPFT2000 sample observation platform; the single particle was positioned using the optical microscope of the SPFT2000 and the pressure head was controlled to press down at a uniform speed. The stress mutation point during the particle compaction process was recorded as the particle crushing force.
Some test results are shown in Table 1.

**Effect Example 2**

The negative electrode sheets in Examples 1 to 21 and Comparative examples 1 to 19 were tested for the specific surface decrease rate, the electrode sheet porosity, the electrode adhesive force $F_N$, and the ultimate compaction. The specific test methods were as follows:

(1) Ultimate compaction of negative electrode sheet
When the appearance of the negative electrode sheet remained good, the negative electrode sheet was rolled by a roller press. When the thickness of the negative electrode sheet did not decrease when the roller press increased the pressure, the thickness of the negative electrode sheet after rolling was measured with a micrometer, and the thickness d was recorded. Then, the negative electrode sheet per unit area was intercepted, and the mass of the copper foil contained therein was subtracted, and the mass was recorded as w. The ultimate compaction of the negative electrode sheet was P=w/d. The ultimate compaction of the negative electrode sheet was an indicator to measure the energy density of the negative electrode sheet. The ultimate compaction of the negative electrode sheets of each example and comparative example is shown in Table 1.
(2) Specific surface decrease rate of negative electrode sheet
The negative electrode sheet was cut into a 2 cm×2 cm negative electrode sheet, and the specific surface area of the negative electrode sheet under the first compaction and the second compaction was respectively tested according to the national standard GB/T 19587-2017; the ratio of the specific surface area of the electrode sheet under the second compaction to that under the first compaction was P, and the electrode sheet specific surface decrease rate $P_0$ =1-P. The first compaction and the second compaction of each example and comparative example are shown in Table 1.
(3) Electrode sheet porosity of negative electrode sheet
The first step was to obtain the negative electrode sheet under the second compaction, in the same manner as the negative electrode sheet obtained in the above test of the specific surface decrease rate of the negative electrode sheet.
The second step was to test according to the national standard GB21650.1-2008, and the porosity could be read directly.
(4) Adhesive force $F_N$ of negative electrode sheet The negative electrode sheet to be tested was cut into a long strip (length×width=10 cm×3 cm), and bonded to a long quartz glass plate (slightly greater in area than the negative electrode sheet) to which a VHB tape is attached. The negative electrode sheet was repeatedly rolled three times using a special small round roller to ensure that the negative electrode sheet was fully bonded to the VHB. The size of the adhesive force of the negative electrode sheet was tested using a universal stretching machine and by selecting the standard method of measuring adhesive force at 180°. Each sample was tested three times and the average value was taken. The specific test results are shown in Table 1.

**Effect Example 3**

The lithium-ion batteries prepared in Examples 1 to 21 and Comparative examples 1 to 19 were tested for discharge capacity, initial efficiency, fast charging time, number of cycles, and storage days. The specific test methods were as follows:

(1) Discharge capacity

At 25 °C, the battery was first activated by charging and discharging at 0.1C in the working voltage range of 2.7 V (discharge cut-off voltage) to 4.3 V (charge cut-off voltage). Then, the lithium-ion battery prepared above was connected to a Blue Electric charge and discharge tester, and long-cycle charge and discharge were performed to measure the charge capacity and the discharge capacity thereof. The working voltage range of the battery test was 2.7 V (discharge cut-off voltage) to 4.3 V (charge cut-off voltage), and the test rate was 0.3C.

$$\text{Initial efficiency} = \text{discharge capacity}/\text{charge capacity} \times 100\%.$$

(2) Fast charging time

The battery cell was directly charged to 8% SOC state with a current of 0.33C, and then according to the actual measured three-electrode window test of the battery cell, the charging windows of 10%, 20%, 30%, 40%, 50%, 60%, 70%, and 80% were C1, C2, C3, C4, C5, C6, C7, and C8 respectively. Charging was gradually performed to 80%, that is, 8% to 10% was performed with C1, 10% to 20% was performed with C2, and so on. The charging time from 8% to 80% SOC state was recorded as the measure of fast charging capability. The calculation equation was $T=(0.02/C1+0.1/C2+0.1/C3+0.1/C4+0.1/C5+0.1/C6+0.1/C7+0.1/C8)\times 60$.

(3) Number of cycles

At 25 °C, the battery was first charged and discharged at 0.1C for one cycle for activation. Then, the lithium-ion battery prepared above was connected to a blue electric charge and discharge tester, and then long-term cycling was performed at a rate of 0.3C until the ratio of the capacity of the n-th cycle to the capacity of the first cycle at 0.3C was less than 80%. The capacity retention rate of the n-1th cycle was defined as 80%, the number of cycles was recorded as n-1, and the test was stopped.

(4) Storage days

At 25 °C, the capacity was set using 0.33C current and recorded as $C_0$. Then the battery cell was stored at 60 °C high temperature. Next, the battery cell was taken out every 7 days and the capacity was tested at room temperature and recorded as $C_1$, $C_2$...$C_n$. The number of days when $C_n$ was less than or equal to 80% of $C_0$ for the first time was the storage time.

The above test results are shown in Table 2.

Table 1

| Number | Ultimate compaction of negative electrode sheet/(g.cc$^{-1}$) | Second compaction/(g .cc$^{-1}$) | First compaction/(g .cc$^{-1}$) | Specific surface decrease rate $P_0$ of negative electrode /(%) | Electrode sheet porosity $\varepsilon$/(%) | Adhesive force of negative electrode sheet $F_N$ /N | Mass ratio of first active material layer to second active material layer | Particle crushing force of first graphite material $F_1$/mN | Particle crushing force of second graphite material $F_2$/mN | Dv50 particle size of first graphite material/ $\mu$m | Dv50 particle size of second graphite material/ $\mu$m |
|---|---|---|---|---|---|---|---|---|---|---|---|
| Example 1 | 1.86 | 1.80 | 1.65 | 14.7 | 23.6 | 38 | 5:5 | 34 | 24 | 16 | 11 |
| Example 2 | 1.80 | 1.80 | 1.65 | 12.5 | 25.2 | 27 | 5:5 | 36 | 30 | 16 | 11 |
| Example 3 | 1.88 | 1.80 | 1.65 | 17.8 | 19.3 | 43 | 5:5 | 30 | 20 | 16 | 11 |
| Example 4 | 1.83 | 1.80 | 1.65 | 13.2 | 24.1 | 33 | 5:5 | 35 | 24 | 16 | 11 |
| Example 5 | 1.87 | 1.80 | 1.65 | 15.9 | 22.2 | 39 | 5:5 | 34 | 22 | 16 | 11 |
| Example 6 | 1.81 | 1.80 | 1.65 | 13.9 | 23.9 | 34 | 5:5 | 34 | 27 | 16 | 11 |
| Example 7 | 1.84 | 1.80 | 1.65 | 13.5 | 24.3 | 32 | 5:5 | 34 | 24 | 16 | 11 |
| Example 8 | 1.88 | 1.80 | 1.65 | 16.4 | 20.5 | 41 | 5:5 | 34 | 24 | 16 | 11 |
| Example 9 | 1.83 | 1.80 | 1.65 | 14.1 | 23.9 | 35 | 5:5 | 34 | 24 | 16 | 11 |
| Example 10 | 1.89 | 1.80 | 1.65 | 15.2 | 24.2 | 33 | 5:5 | 34 | 24 | 16 | 11 |
| Example 11 | 1.85 | 1.80 | 1.65 | 13.3 | 21.2 | 45 | 5:5 | 34 | 24 | 16 | 11 |
| Example 12 | 1.86 | 1.80 | 1.65 | 17.2 | 20.6 | 25 | 5:5 | 34 | 24 | 16 | 11 |
| Example 13 | 1.85 | 1.80 | 1.65 | 12.7 | 22.5 | 40 | 5:5 | 34 | 24 | 16 | 11 |
| Example 14 | 1.80 | 1.80 | 1.65 | 12 | 25.6 | 25 | 3:7 | 34 | 24 | 16 | 11 |
| Example 15 | 1.83 | 1.80 | 1.65 | 13.7 | 23.2 | 28 | 4:6 | 34 | 24 | 16 | 11 |

(continued)

| Number | Ultimate compaction of negative electrode sheet/(g.cc$^{-1}$) | Second compaction/(g .cc$^{-1}$) | First compaction/(g .cc$^{-1}$) | Specific surface decrease rate $P_0$ of negative electrode /(%) | Electrode sheet porosity ε/(%) | Adhesive force of negative electrode sheet $F_N$ /N | Mass ratio of first active material layer to second active material layer | Particle crushing force of first graphite material $F_1$/mN | Particle crushing force of second graphite material $F_2$/mN | Dv50 particle size of first graphite material/ μm | Dv50 particle size of second graphite material/ μm |
|---|---|---|---|---|---|---|---|---|---|---|---|
| Example 16 | 1.87 | 1.80 | 1.65 | 16.7 | 20.9 | 43 | 6:4 | 34 | 24 | 16 | 11 |
| Example 17 | 1.90 | 1.80 | 1.65 | 17.7 | 18.2 | 50 | 7:3 | 34 | 24 | 16 | 11 |
| Example 18 | 1.89 | 1.80 | 1.65 | 15.3 | 22.7 | 41 | 5:5 | 34 | 24 | 18 | 11 |
| Example 19 | 1.86 | 1.80 | 1.65 | 15 | 23.1 | 40 | 5:5 | 34 | 24 | 16 | 13 |
| Example 20 | 1.83 | 1.80 | 1.65 | 14.9 | 23.5 | 33 | 5:5 | 33 | 24 | 16 | 11 |
| Example 21 | 1.87 | 1.80 | 1.65 | 14.5 | 23.1 | 31 | 5:5 | 31 | 24 | 16 | 11 |
| Comparative example 1 | 1.74 | 1.74 | 1.65 | 10.7 | 31.6 | 18 | 5:5 | 39 | 32 | 16 | 11 |
| Comparative example 2 | 1.89 | 1.80 | 1.65 | 21.7 | 15.6 | 56 | 5:5 | 28 | 17 | 16 | 11 |
| Comparative example 3 | 1.76 | 1.76 | 1.65 | 11.5 | 29.6 | 18 | 5:5 | 37 | 24 | 16 | 11 |
| Comparative example 4 | 1.73 | 1.73 | 1.65 | 8.7 | 33.6 | 14 | 5:5 | 34 | 33 | 16 | 11 |

(continued)

| Number | Ultimate compaction of negative electrode sheet/(g.cc$^{-1}$) | Second compaction/(g .cc$^{-1}$) | First compaction/(g .cc$^{-1}$) | Specific surface decrease rate $P_0$ of negative electrode /(%) | Electrode sheet porosity ε/(%) | Adhesive force of negative electrode sheet $F_N$ /N | Mass ratio of first active material layer to second active material layer | Particle crushing force of first graphite material $F_1$/mN | Particle crushing force of second graphite material $F_2$/mN | Dv50 particle size of first graphite material/ μm | Dv50 particle size of second graphite material/ μm |
|---|---|---|---|---|---|---|---|---|---|---|---|
| Comparative example 5 | 1.83 | 1.80 | 1.65 | 19.7 | 16.9 | 56 | 5:5 | 34 | 15 | 16 | 11 |
| Comparative example 6 | 1.71 | 1.71 | 1.65 | 6.7 | 35.1 | 11 | 5:5 | 34 | 40 | 16 | 11 |
| Comparative example 7 | 1.78 | 1.78 | 1.65 | 10.8 | 29.6 | 21 | 5:5 | 34 | 24 | 16 | 11 |
| Comparative example 8 | 1.77 | 1.77 | 1.65 | 19.5 | 17.6 | 68 | 5:5 | 34 | 24 | 16 | 11 |
| Comparative example 9 | 1.78 | 1.78 | 1.65 | 8.7 | 31.6 | 23 | 5:5 | 34 | 24 | 16 | 11 |
| Comparative example 10 | 1.76 | 1.76 | 1.65 | 11.5 | 28.6 | 59 | 5:5 | 34 | 24 | 16 | 11 |
| Comparative example 11 | 1.76 | 1.76 | 1.65 | 21.7 | 16.4 | 23 | 5:5 | 34 | 24 | 16 | 11 |
| Comparative example 12 | 1.74 | 1.74 | 1.65 | 23.7 | 15.1 | 13 | 5:5 | 34 | 24 | 16 | 11 |

(continued)

| Number | Ultimate compaction of negative electrode sheet/(g.cc$^{-1}$) | Second compaction/(g .cc$^{-1}$) | First compaction/(g .cc$^{-1}$) | Specific surface decrease rate $P_0$ of negative electrode /(%) | Electrode sheet porosity ε/(%) | Adhesive force of negative electrode sheet $F_N$ /N | Mass ratio of first active material layer to second active material layer | Particle crushing force of first graphite material $F_1$/mN | Particle crushing force of second graphite material $F_2$/mN | Dv50 particle size of first graphite material/ μm | Dv50 particle size of second graphite material/ μm |
|---|---|---|---|---|---|---|---|---|---|---|---|
| Comparative example 13 | 1.72 | 1.72 | 1.65 | 18.7 | 29.6 | 39 | 5:5 | 34 | 24 | 16 | 11 |
| Comparative example 14 | 1.68 | 1.68 | 1.65 | 8.5 | 33.6 | 9 | / | / | 24 | 16 | 11 |
| Comparative example 15 | 1.91 | 1.80 | 1.65 | 23.7 | 15.6 | 58 | / | 34 | / | 16 | 11 |
| Comparative | 1.80 | 1.80 | 1.65 | 21.0 | 10.6 | 5.7 | 5:5 | 34 | 24 | 16 | 11 |
| example 16 | | | | | | | | | | | |
| Comparative example 17 | 1.82 | 1.80 | 1.65 | 19.1 | 12.3 | 15.7 | 5:5 | 34 | 24 | 16 | 11 |
| Comparative example 18 | 1.65 | 1.65 | 1.60 | 21.36 | 10.2 | 2.24 | / | / | / | / | / |
| Comparative example 19 | 1.68 | 1.65 | 1.63 | 9.2 | 28 | 1.2 | 5:5 | 14 | 14 | 6.7 | 6.7 |

Table 2

| Number | Discharge capacity/(mAh/g) | Initial efficiency /(%) | Fast charging time/minutes | Number of cycles/cycles | Storage days/days |
|---|---|---|---|---|---|
| Example 1 | 363.2 | 91.8 | 17.4 | 2896 | 336 |
| Example 2 | 360.5 | 90.5 | 15.8 | 2436 | 301 |
| Example 3 | 365.5 | 92.6 | 18.7 | 3125 | 385 |
| Example 4 | 362.4 | 91.3 | 16.5 | 2653 | 315 |
| Example 5 | 364 | 92.1 | 17.9 | 3013 | 350 |
| Example 6 | 361.8 | 90.8 | 16.4 | 2657 | 308 |
| Example 7 | 362.9 | 91.5 | 16.9 | 2752 | 322 |
| Example 8 | 363.3 | 91.1 | 16.2 | 3013 | 315 |
| Example 9 | 362.9 | 92.1 | 17.8 | 2953 | 350 |
| Example 10 | 363.9 | 91.8 | 16.9 | 2596 | 357 |
| Example 11 | 362.3 | 91.5 | 17.8 | 3252 | 329 |
| Example 12 | 363.7 | 92 | 15.2 | 2378 | 315 |
| Example 13 | 363 | 91.4 | 18.2 | 3015 | 343 |
| Example 14 | 358.9 | 90.1 | 14.5 | 2596 | 287 |
| Example 15 | 359.5 | 90.6 | 15.1 | 2684 | 287 |
| Example 16 | 364.2 | 92.1 | 18.5 | 3096 | 357 |
| Example 17 | 365.9 | 92.5 | 19.1 | 3296 | 378 |
| Example 18 | 364.7 | 92.3 | 18.3 | 3104 | 357 |
| Example 19 | 363.8 | 92 | 17.8 | 3001 | 343 |
| Example 20 | 364.1 | 91.0 | 16.7 | 2769 | 315 |
| Example 21 | 362.5 | 91.5 | 17.7 | 2532 | 294 |
| Comparative example 1 | 357.2 | 87.5 | 18.8 | 1636 | 210 |
| Comparative example 2 | 366.2 | 92.8 | 31.7 | 1825 | 259 |
| Comparative example 3 | 362.8 | 89.3 | 26.5 | 1553 | 252 |
| Comparative example 4 | 361.8 | 87.8 | 29.2 | 1657 | 245 |
| Comparative example 5 | 364.6 | 92.2 | 36.9 | 1320 | 266 |
| Comparative example 6 | 358.8 | 85.8 | 20.2 | 1157 | 189 |
| Comparative example 7 | 360.8 | 87.9 | 27.2 | 1557 | 245 |
| Comparative example 8 | 361.2 | 86.2 | 33.2 | 1357 | 196 |
| Comparative example 9 | 362.9 | 89.9 | 17.8 | 1653 | 252 |
| Comparative example 10 | 359.6 | 88.1 | 27.7 | 1543 | 259 |
| Comparative example 11 | 363.6 | 89.7 | 23.4 | 1243 | 154 |
| Comparative example 12 | 364.6 | 87.1 | 20.3 | 1161 | 126 |
| Comparative example 13 | 360.6 | 89.1 | 23.5 | 1375 | 189 |
| Comparative example 14 | 359.6 | 86.1 | 20.1 | 1447 | 119 |
| Comparative example 15 | 366.6 | 89.7 | 47.8 | 1843 | 259 |
| Comparative example 16 | 363.2 | 88.1 | 33.4 | 1896 | 252 |
| Comparative example 17 | 364.6 | 87.1 | 24.5 | 2161 | 273 |

(continued)

| Number | Discharge capacity/(mAh/g) | Initial efficiency /(%) | Fast charging time/minutes | Number of cycles/cycles | Storage days/days |
|---|---|---|---|---|---|
| Comparative example 18 | 345.2 | 91.2 | 33.8 | 3256 | 301 |
| Comparative example 19 | 340.2 | 86.9 | 21.4 | 651 | 98 |
| Note: "/" in Table 1 means that the condition parameter was not involved in the specific experiment. | | | | | |

According to Table 1 and Table 2, the specific surface decrease rate $P_0$ of the negative electrode sheets obtained in Examples 1 to 21 was between 12% and 17.8%, the electrode sheet porosity $\varepsilon$ thereof was between 18.2% and 25.6%, and the ultimate compaction of the negative electrode sheets could reach 1.8 g.cc$^{-1}$ or more. The lithium-ion battery containing the negative electrode sheet could ensure excellent discharge capacity, fast charging performance, and cycle performance, and take into account excellent energy density, cycle performance, and storage performance. Specifically, the discharge capacity of the lithium-ion battery could reach 358 mAh/g or more, the discharge capacity could reach 20 minutes or less, and the number of cycles could reach 2200 or more. On this basis, the initial efficiency could reach 90% or more, and the storage days could reach 280 days or more.

The inventors found via research that only by adopting the negative electrode sheet with a specific surface decrease rate and electrode sheet porosity in the present disclosure could the lithium-ion battery have excellent discharge capacity, fast charging performance, and cycle performance, while taking into account excellent energy density, cycle performance, and storage performance. When the specific surface decrease rate of the negative electrode sheet and the electrode sheet porosity were too large or too small, it was impossible to ensure that the resulting lithium-ion battery had the above excellent electrochemical properties.

Compared with Example 1, the specific surface decrease rate $P_0$ of the negative electrode sheet obtained in Comparative example 1 was too small, the ultimate compaction of the negative electrode sheet was significantly reduced, the fast charging time of the lithium-ion battery containing the above was prolonged, and the discharge capacity, the number of cycles, the initial efficiency, and the storage days were all significantly deteriorated.

Compared with Example 1, the specific surface decrease rate $P_0$ of the negative electrode sheet obtained in Comparative example 2 was too large. Although the ultimate compaction of the negative electrode sheet was higher, and the lithium-ion battery containing the above had a higher discharge capacity and initial efficiency, the fast charging time of the lithium-ion battery was significantly prolonged, and the number of cycles and the storage days were significantly reduced.

Compared with Example 1, the specific surface decrease rate $P_0$ of the negative electrode sheets obtained in Comparative examples 3 to 4 and 6 to 7 was too small. Although the discharge capacity of the lithium-ion batteries containing the above was equivalent, the ultimate compaction of the negative electrode sheets was significantly reduced, and the fast charging time, the number of cycles, the initial efficiency, and the storage days of the lithium-ion batteries were all significantly deteriorated.

Compared with Example 1, the specific surface decrease rate $P_0$ of the negative electrode sheet obtained in Comparative example 5 was too large. Although the ultimate compaction of the negative electrode sheet was equivalent, and the lithium-ion battery containing the above had a higher discharge capacity and initial efficiency, the fast charging time of the lithium-ion battery was significantly prolonged, and the number of cycles and the storage days were significantly reduced.

Compared with Example 1, the specific surface decrease rate $P_0$ of the negative electrode sheet obtained in Comparative example 8 was too large, the ultimate compaction of the negative electrode sheet was significantly reduced, the discharge capacity of the lithium-ion battery containing the above was reduced, the fast charging time was significantly prolonged, and the number of cycles, the initial efficiency, and the storage days were all significantly deteriorated.

Compared with Example 1, the specific surface decrease rate $P_0$ of the negative electrode sheet obtained in Comparative example 9 was too small. Although the fast charging time and the discharge capacity of the resulting lithium-ion battery were equivalent, the ultimate compaction of the negative electrode sheet was significantly reduced, the number of cycles of the lithium-ion battery was significantly reduced, and the initial efficiency and the storage days were both significantly deteriorated.

Compared with Example 1, the specific surface decrease rate $P_0$ of the negative electrode sheets obtained in Comparative examples 10 and 14 was too small, the ultimate compaction of the negative electrode sheets was significantly reduced, the fast charging time of the lithium-ion batteries containing the above was significantly prolonged, and the discharge capacity, the number of cycles, the initial efficiency, and the storage days were all significantly deteriorated.

Compared with Example 1, the specific surface decrease rate $P_0$ of the negative electrode sheets obtained in Comparative examples 11 to 12 was too large. Although the discharge capacity of the resulting lithium-ion battery was equivalent, the ultimate compaction of the negative electrode sheet was significantly reduced, the fast charging time of the lithium-ion battery was significantly prolonged, and the number of cycles, the initial efficiency, and the storage days were all significantly reduced.

Compared with Example 1, the specific surface decrease rate $P_0$ of the negative electrode sheet obtained in Comparative example 13 was too large, the ultimate compaction of the negative electrode sheet was significantly reduced, the discharge capacity of the lithium-ion battery containing the above was deteriorated, and the fast charging time, the number of cycles, the initial efficiency, and the storage days were all significantly deteriorated.

Compared with Example 1, the specific surface decrease rate $P_0$ of the negative electrode sheet obtained in Comparative example 15 was too large. Although the ultimate compaction of the negative electrode sheet and the discharge capacity of the lithium-ion battery were better, the fast charging time of the lithium-ion battery was significantly deteriorated, and the number of cycles, the initial efficiency, and the storage days were all significantly deteriorated.

Compared with Example 1, the specific surface decrease rate $P_0$ of the negative electrode sheets obtained in Comparative examples 16 to 17 was too large, and the electrode sheet porosity $\varepsilon$ was too small. Although the discharge capacity of the lithium-ion battery was better, the ultimate compaction of the negative electrode sheet was reduced, the fast charging time of the lithium-ion battery was significantly deteriorated, and the number of cycles, the initial efficiency, and the storage days were all significantly reduced.

Compared with Example 1, the specific surface decrease rate $P_0$ of the negative electrode sheet obtained in Comparative example 18 was too large, and the electrode sheet porosity $\varepsilon$ was too small. Although the number of cycles and the initial efficiency of the lithium-ion battery were better, the ultimate compaction of the negative electrode sheet was significantly deteriorated, the discharge capacity of the lithium-ion battery was significantly reduced, the fast charging time was significantly prolonged, and the storage days were significantly reduced.

Compared with Example 1, the specific surface decrease rate $P_0$ of the negative electrode sheet obtained in Comparative example 19 was too small, the ultimate compaction of the negative electrode sheet was significantly reduced, the fast charging time of the lithium-ion battery containing the above was significantly prolonged, the discharge capacity and the number of cycles were significantly reduced, and the initial efficiency and the storage days were significantly deteriorated.

## Claims

1. A negative electrode sheet, wherein a specific surface area decrease rate $P_0$ of a negative electrode sheet is 12% to 18%; wherein $P_0$=1-P, P is a ratio of a specific surface area of the negative electrode sheet under a second compaction to the specific surface area of the negative electrode sheet under a first compaction;

   an electrode sheet porosity $\varepsilon$ of the negative electrode sheet is 13% or more, wherein the electrode sheet porosity is the electrode sheet porosity of the negative electrode sheet under the second compaction;
   the second compaction is 1.80 g/cc or an ultimate compaction of the negative electrode sheet; the first compaction is 1.65 g/cc.

2. The negative electrode sheet of claim 1, wherein the negative electrode sheet satisfies one or a plurality of following conditions a to c:

   a, the $P_0$ is 13% to 17%;
   b, the $\varepsilon$ is 18% to 26%;
   c, an adhesive force $F_N$ of the negative electrode sheet is 25 N to 50 N.

3. The negative electrode sheet of claim 1, wherein the negative electrode sheet comprises a negative electrode current collector, a first active material layer is disposed on at least one surface of the negative electrode current collector, a second active material layer is disposed on the first active material layer, the first active material layer comprises a first graphite material and a first binder, the second active material layer comprises a second graphite material and a second binder, and a Dv50 particle size of the first graphite material is greater than a Dv50 particle size of the second graphite material.

4. The negative electrode sheet of claim 3, wherein the first graphite material and the second graphite material satisfy one or a plurality of following conditions a to i:

   a, a difference between the Dv50 particle size of the first graphite material and the Dv50 particle size of the second graphite material is 3 μm to 7 μm;
b, a particle crushing force $F_1$ of the first graphite material is 30 mN to 36 mN;
c, a particle crushing force $F_2$ of the second graphite material is 20 mN to 30 mN;
d, a carbon content of the first graphite material is 99.9% or more, and the percentage is a mass percentage of the first graphite material;
e, a carbon content of the second graphite material is 99.9% or more, and the percentage is a mass percentage of the first graphite material;
f, the Dv50 particle size of the first graphite material is 14 μm to 18 μm;
g, the Dv50 particle size of the second graphite material is 9 μm to 13 μm;
h, the first graphite material is a microcrystalline graphite material;
i, the second graphite material is a microcrystalline graphite material.

**5.** The negative electrode sheet of claim 3, wherein the first active material layer and the second active material layer satisfy one or a plurality of following conditions a to g:

a, a content of the first binder is 1.3% to 1.8%, and the percentage is a mass percentage of the first active material layer;
b, a content of the second binder is 0.7% to 1.2%, and the percentage is a mass percentage of the second active material layer;
c, a content of the first graphite material is 20% or more, and the percentage is a mass percentage of the first active material layer;
d, a content of the second graphite material is 20% or more, and the percentage is a mass percentage of the second active material layer;
e, a mass ratio of the first active material layer to the second active material layer is 1:(0.4 to 2.5);
f, a thickness of the first active material layer is 50 μm to 120 μm;
g, a thickness of the second active material layer is 50 μm to 110 μm.

**6.** The negative electrode sheet of claim 3, wherein a preparation method of the negative electrode sheet comprises following steps:

S1, applying a first negative electrode slurry layer on at least one surface of the negative electrode current collector, and the first negative electrode slurry layer comprises a first graphite material and a first binder;
S2, applying a second negative electrode slurry layer on the first negative electrode slurry layer, and the second negative electrode slurry layer comprises a second graphite material and a second binder;
S3, performing drying and cold pressing to obtain the negative electrode sheet.

**7.** The negative electrode sheet of claim 6, wherein the first graphite material and the second graphite material satisfy one or a plurality of following conditions a to d:

a, a coating density of the first negative electrode slurry layer is greater than 0.055 g/cm$^2$;
b, a coating density of the second negative electrode slurry layer is greater than 0.055 g/cm$^2$;
c. in step S1, the first graphite material is obtained by a pre-treatment of a first graphite precursor, and the pre-treatment comprises a surface oxidation treatment and/or a carboxylation treatment;
d. in step S2, the second graphite material is obtained by a pre-treatment of the second graphite precursor, and the pre-treatment comprises a surface oxidation treatment and/or a carboxylation treatment.

**8.** The negative electrode sheet of claim 7, wherein the first graphite precursor and the second graphite precursor each independently satisfy one or two of following conditions a to b:

a, the first graphite precursor and the second graphite precursor independently satisfy following conditions: La ≤72 nm, Lc ≤15 nm; wherein La is a lattice constant at a 110 plane, and Lc is a lattice constant at a 002 plane; $F_p$≥15 mN, and $F_p$ is a particle crushing force;
b, preparation methods of the first graphite precursor and the second graphite precursor each independently comprise following steps:

① performing a first mixing on a microcrystalline graphite precursor and a binder, and adding a solvent to perform a second mixing to obtain a mixture; wherein a temperature of the first mixing is 5 °C to 20 °C below a softening point of the binder;

② pressing the mixture to obtain a microcrystalline graphite rough blank;
③ laying the microcrystalline graphite rough blank at a surface of a graphitization furnace, laying a graphitized thermal insulation material on the microcrystalline graphite rough blank, and performing a graphitization treatment, and the microcrystalline graphite rough blank is subjected to a graphitization treatment to obtain a microcrystalline graphite blank body;
④ performing a crushing treatment on the microcrystalline graphite blank body.

**9.** An electrochemical device, comprising the negative electrode sheet of any of claims 1 to 8.

**10.** An electronic equipment, comprising the electrochemical device of claim 9.

Europäisches
Patentamt
European
Patent Office
Office européen
des brevets

# EUROPEAN SEARCH REPORT

Application Number
EP 25 20 9383

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 118 738 268 A (BYD CO LTD; SHENZHEN BYD LITHIUM BATTERY CO LTD) 1 October 2024 (2024-10-01) * paragraphs [0035] - [0038], [0051], [0060], [0063], [0071], [0072] * ----- | 1-10 | INV. H01M4/04 H01M4/133 H01M4/1393 H01M4/36 |
| X | US 2023/268506 A1 (JANG HYUN JOONG [KR] ET AL) 24 August 2023 (2023-08-24) * paragraphs [0006] - [0018], [0074], [0075] * ----- | 1-10 | |

TECHNICAL FIELDS SEARCHED (IPC)

H01M

The present search report has been drawn up for all claims

1

| Place of search | Date of completion of the search | Examiner |
|---|---|---|
| Munich | 6 March 2026 | Mugnaini, Veronica |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT ON EUROPEAN PATENT APPLICATION NO. EP 25 20 9383

This annex lists the patent family members relating to the patent documents cited in the above-mentioned European search report. The members are as contained in the European Patent Office EDP file on
The European Patent Office is in no way liable for these particulars which are merely given for the purpose of information.

06-03-2026

| Patent document cited in search report | Publication date | Patent family member(s) | Publication date |
|---|---|---|---|
| CN 118738268 A | 01-10-2024 | CN 118738268 A | 01-10-2024 |
| | | WO 2026001563 A1 | 02-01-2026 |
| US 2023268506 A1 | 24-08-2023 | CN 116632167 A | 22-08-2023 |
| | | EP 4231378 A1 | 23-08-2023 |
| | | KR 20230126262 A | 30-08-2023 |
| | | US 2023268506 A1 | 24-08-2023 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- CN 110380050 A
- GB 2165012008 A